Europäisches Patentamt

European Patent Office

Office européen des brevets

(19)

(11) Numéro de publication : **0 337 042 B1**

(12) # FASCICULE DE BREVET EUROPEEN

(45) Date de publication du fascicule du brevet :
**27.12.91 Bulletin 91/52**

(51) Int. Cl.⁵ : **B60S 1/40, B60S 1/52**

(21) Numéro de dépôt : **88401527.2**

(22) Date de dépôt : **20.06.88**

(54) Essuie-glace pour véhicule automobile.

(30) Priorité : **13.04.88 FR 8804901**

(43) Date de publication de la demande :
**18.10.89 Bulletin 89/42**

(45) Mention de la délivrance du brevet :
**27.12.91 Bulletin 91/52**

(84) Etats contractants désignés :
**DE ES FR GB IT**

(56) Documents cités :
**DE-A- 2 942 086**
**DE-A- 3 340 449**
**DE-A- 3 545 784**
**FR-A- 2 603 850**

(56) Documents cités :
**GB-A- 1 314 938**
**US-A- 3 179 969**
**US-A- 4 224 001**
**US-A- 4 608 728**

(73) Titulaire : **PAUL JOURNEE S.A.**
**1, Bd Charles de Gaulle**
**F-92707 Colombes Cedex (FR)**

(72) Inventeur : **Journee, Maurice**
**Le Bois Hédouin Reilly**
**F-60240 Chaumont-en-Vexin (FR)**

(74) Mandataire : **Lemaire, Marc**
**VALEO Département Propriété Industrielle 30,**
**rue Blanqui**
**F-93406 Saint-Ouen (FR)**

EP 0 337 042 B1

## Description

L'invention concerne un essuie-glace pour véhicule automobile du type comprenant un bras porte-balai à mouvement oscillant auquel est articulé un balai d'essuie-glace par l'intermédiaire d'un dispositif connecteur comportant des moyens de liaison démontables du balai d'essuie-glace.

Habituellement, le dispositif connecteur est fixé sur le bras porte-balai et le balai est articulé sur le connecteur (voir, par exemple, DE-A-3340449).

Dans les essuie-glace connus de ce type, les efforts transversaux appliqués sur le balai au cours de l'essuyage produisent une certaine torsion du balai du fait du jeu existant obligatoirement entre l'axe d'articulation et la portée de pivotement sur cet axe. Cette torsion est préjudiciable au bon fonctionnement du balai et est génératrice de bruit.

En outre, cet ensemble connu est coûteux car, lors de l'échange du balai usé, il est en général nécessaire d'utiliser un nouveau connecteur.

De plus, une telle construction se prête mal à l'utilisation de déflecteurs qui sont mis en oeuvre afin d'augmenter la pression d'appui du balai sur la vitre à haute vitesse du véhicule.

De manière connue, de tels dispositifs de déflecteurs sont soit liés au bras, soit fabriqués en une seule pièce avec le bras porte-balai ou avec le balai comme il est décrit par exemple dans le document DE-A-3340449.

Lorsque ledit déflecteur est lié au balai d'essuie-glace, il garde, lors du balayage, une position relative constante par rapport au pare-brise, ce qui lui confère une bonne efficacité ; par contre, le prix du balai d'essuie-glace augmente notablement, ce qui dissuade les automobilistes de remplacer les balais usés. Lorsque, comme dans d'autres dispositions connues, le déflecteur est lié au bras, sa position relative par rapport à la surface du pare-brise varie au cours du balayage, ce qui lui enlève de son efficacité mais, lors du changement du balai d'essuie-glace, celui-ci est moins cher.

Il est également difficile et peu esthétique d'équiper un tel essuie-glace connu d'une buse de pulvérisation pour un liquide de lavage dont le positionnement au niveau de cet équipage mobile est pourtant essentiel pour un lavage efficace.

La présente invention vise en conséquence à pallier ces défauts des essuie-glace connus et, principalement, à assurer un guidage efficace du balai au cours des oscillations de l'ensemble mobile.

A cet effet, l'invention a pour objet un essuie-glace pour véhicule automobile du type comprenant un bras porte-balai à mouvement oscillant auquel est articulé un balai d'essuie-glace par l'intermédiaire d'un dispositif connecteur, comportant des moyens de liaison démontables du balai d'essuie-glace, caractérisé en ce que le connecteur porte d'une part la surface déflectrice d'un déflecteur et d'autre part des moyens d'articulation du bras porte-balai s'étendant transversalement à ce dernier. Le balai est ainsi fixé sur le connecteur et les efforts transversaux sont transmis à ce connecteur dont l'articulation avec le bras porte-balai peut être réalisée avec un jeu très réduit.

De manière avantageuse, les moyens de fixation du balai d'essuie-glace sont démontables afin de permettre le remplacement dudit balai, alors que les moyens d'articulation du bras ne le sont pas.

Le connecteur étant solidaire du bras n'est donc pas échangé avec le balai et la liaison connecteur-bras peut être réalisée de manière précise pour limiter les jeux.

Selon une forme de réalisation particulièrement préférée de l'invention, le connecteur comporte au moins une surface de guidage coopérant avec une surface de guidage complémentaire du bras porte-balai. Avec cette forme de réalisation, le jeu entre le connecteur, qui porte le balai, et le bras est limité par la coopération des surfaces de guidage.

Avantageusement, le connecteur comporte un bloc de guidage logé entre les ailes du bras.

La fixation du balai sur le connecteur peut être effectuée de diverses manières. On peut prévoir que, le balai d'essuie-glace comportant une ouverture, les moyens de liaison comportent des crochets coopérant élastiquement avec les bords de l'ouverture. En variante de ces crochets, ou en plus de ceux-ci, lorsque le balai est muni d'un axe transversal, on peut prévoir que les moyens de liaison comportent une pince s'encliquetant sur ledit axe.

Le connecteur peut comprendre un conduit longitudinal adjacent au balai, alimenté en liquide sous pression, et muni de buses de pulvérisation.

Avantageusement le bord libre de la surface déflectrice est muni d'une lèvre élastique.

L'invention sera bien comprise à la lecture de la description suivante faite en se référant au dessin annexé dans lequel :

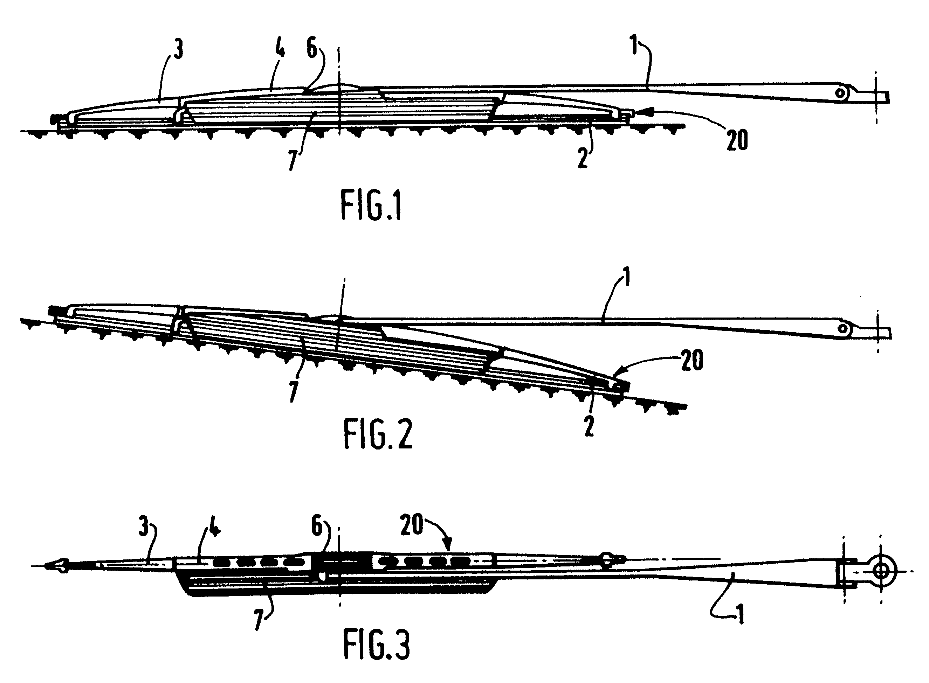

— la figure 1 est une vue schématique en élévation latérale d'un essuie-glace selon un exemple de réalisation de l'invention, le balai étant en appui sur une surface plane ;

— la figure 2 est analogue à la figure 1, le balai étant en appui sur une surface oblique correspondant à une courbure de la vitre à essuyer ;

— la figure 3 est une vue de dessus de l'essuie-glace des figures 1 et 2 ;

— la figure 4 est une vue schématique en coupe longitudinale d'une partie du balai et du déflecteur de l'essuie-glace des figures 1 à 3 ;

— les figures 5 et 6 sont des vues en coupe transversale au droit de l'axe d'articulation du bras, pour deux variantes de l'essuie-glace selon les figures 1 à 4 ; et

— la figure 7 est une vue en coupe transversale d'un ensemble selon une autre variante de réalisation de l'invention.

L'essuie-glace est constitué d'un bras porte-balai oscillant 1 sur lequel est monté un balai 20 comprenant une raclette 2 et une structure d'appui déformable 3 avec un pont central 4 muni, de manière usuelle, d'un axe transversal 5 et d'une ouverture rectangulaire 6 pour le passage d'un dispositif connecteur. L'ensemble est muni d'un connecteur 7 en matière synthétique moulée formant déflecteur.

Conformément à l'invention, le déflecteur 7 est encliqueté dans l'ouverture 6 du grand pont 4, par exemple au moyen de crochets 8 coopérant élastiquement avec les bords de l'ouverture 6 et/ou d'une pince 9 s'encliquetant sur l'axe 5. Ces moyens de liaison 8, 9 entre le déflecteur 7 et le balai 20 assurent la liaison du balai au déflecteur dans une position fixe. Lors du balayage, ledit déflecteur 7 se déplace ainsi en même temps que le balai, ce qui lui permet de garder une position par rapport au pare-brise fixe.

Le déflecteur 7 comporte en outre des moyens d'articulation du bras porte-balai. Ces moyens peuvent, tel que représenté, être formés par un axe 10 venu de moulage avec le déflecteur 7 auquel on lie le bras porte-balai 1. Cette liaison est prévue telle qu'elle autorise un mouvement de rotation du déflecteur par rapport au bras.

Dans une forme préférée de réalisation, ces moyens d'articulation ne sont pas démontables, le conducteur désirant changer son balai d'essuie-glace ne risquera pas de désolidariser le déflecteur du porte-balai.

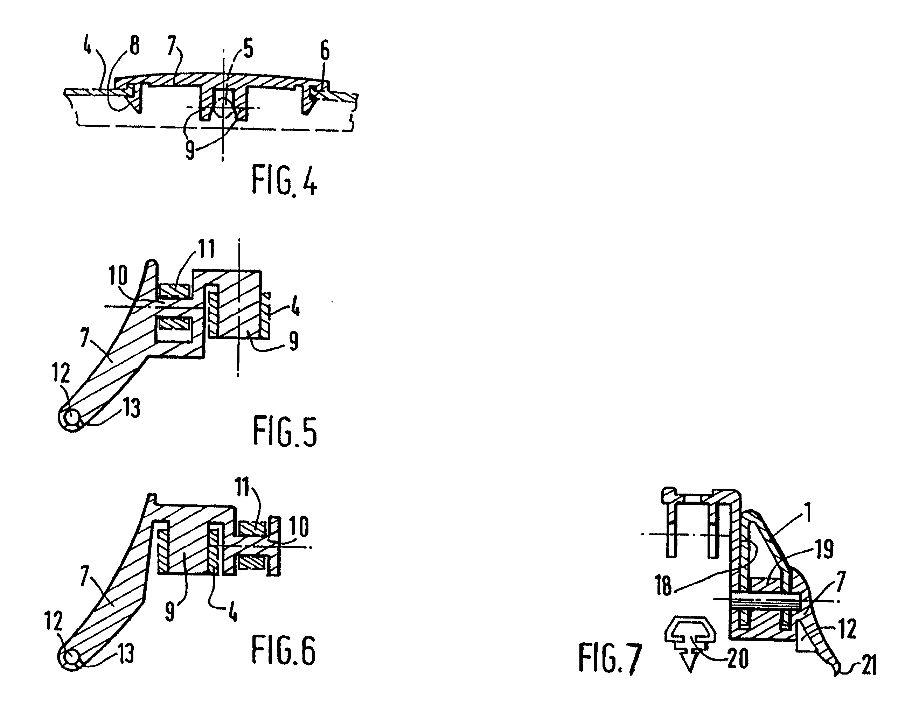

Dans la forme de réalisation de la figure 5, lesdits moyens d'articulation 10 sont situés entre la partie courante du déflecteur 7 et les moyens de liaison 8, 9 du balai. Dans la variante de la figure 6, ce sont au contraire les moyens de liaison du balai qui sont entre la partie courante du déflecteur 7 et les moyens d'articulation.

Bien entendu, ces moyens d'articulation ne sont pas limités à ceux représentés. On pourrait avoir une articulation directe du bras sur le déflecteur en prévoyant, par exemple, un bras de section en U articulé par un rivet sur un bossage dudit déflecteur.

De même, les moyens de liaison sont de toute forme assurant une fixation sans possibilité de rotation relative du balai sur le déflecteur.

Ces moyens doivent être tels qu'ils puissent s'adapter à toute forme de balai afin de permettre au conducteur de changer celui-ci selon sa convenance.

Le déflecteur 7 peut comprendre, de manière connue en soi, un conduit longitudinal 12 au voisinage du bord libre de la surface déflectrice, ce conduit étant alimenté en liquide d'arrosage de la surface à essuyer qui est pulvérisé sur cette surface par des gicleurs 13.

Dans cette forme de réalisation de la figure 7, dans laquelle le connecteur 7 comporte une surface déflectrice, celle-ci porte le conduit d'arrosage 12 et est munie le long de son bord libre d'une lèvre souple 21 en élastomère évitant d'abimer la vitre à essuyer lorsque le déflecteur vient en contact avec elle-ci.

## Revendications

1. Essuie-glace pour véhicule automobile du type comprenant un bras porte-balai (1) à mouvement oscillant auquel est articulé un balai d'essuie-glace (20) par l'intermédiaire d'un dispositif connecteur (7) comportant des moyens de liaison (8, 9) démontables du balai d'essuie-glace (20), caractérisé en ce que le connecteur (7) porte d'une part la surface déflectrice d'un déflecteur (7) et d'autre part des moyens d'articulation (10) du bras porte-balai (1) s'étendant transversalement à ce dernier.

2. Essuie-glace selon la revendication 1, caractérisé en ce que le bord libre du déflecteur (7) est muni d'une lèvre souple (21).

3. Essuie-glace selon la revendication 1 ou 2, caractérisé en ce que le déflecteur (7) comprend un conduit longitudinal (12) adjacent à son bord libre, ce conduit étant alimenté en liquide qui est pulvérisé par des buses de pulvérisation (13).

4. Essuie-glace selon l'une des revendications précédentes, caractérisé en ce que les moyens d'articulation (10) ne sont pas démontables.

5. Essuie-glace selon l'une des revendications précédentes, caractérisé en ce que le balai d'essuie-glace (20) présentant une ouverture (6), les moyens de liaison (8, 9) comportent des crochets (8) coopérant élastiquement avec les bords de ladite ouverture (6).

6. Essuie-glace selon l'une des revendications précédentes, caractérisé en ce que le balai (20) présentant un axe transversal (5), les moyens de liaison (8, 9) comportent une pince (9) s'encliquetant sur ledit axe (5).

7. Essuie-glace selon l'une des revendications précédentes, caractérisé en ce que le déflecteur (7) comporte au moins une surface de guidage (19) coopérant avec une surface de guidage complémentaire du bras porte-balai (1).

8. Essuie-glace selon l'une des revendications précédentes, caractérisé en ce que le déflecteur (7) comporte un bloc de guidage (19) logé entre des ailes du bras (1).

## Patentansprüche

1. Scheibenwischer für Kraftfahrzeug, enthaltend einen Wischblattarm (1) für Hin- und Herbewegung, woran gelenkig ein Scheibenwischerblatt (20) mit Hilfe eines Verbindungsstücks (7) befestigt ist, die vom Scheibenwischerblatt (20) abnehmbare Verbindungsmittel (8, 9) aufweisen, **dadurch gekennzeich-**

net, daß das Verbindungsstück (7) einerseits die Ablenkfläche eines Ablenkelements (7) und andererseits Gelenkmittel (10) für den Wischblattarm (1), die quer zu diesem verlaufen, trägt.

2. Scheibenwischer nach Anspruch 1, **dadurch gekennzeichnet,** daß die freie Kante des Ablenkelements (7) mit einer weichen Lippe (21) versehen ist.

3. Scheibenwischer nach Anspruch 1 oder 2, **dadurch gekennzeichnet,** daß das Ablenkelement (7) einen an die freie Kante angrenzenden Längskanal (12) enthält, der mit Flüssigkeit gespeist wird, welche durch Sprühdüsen (13) versprüht wird.

4. Scheibenwischer nach einem der vorherigen Ansprüche, **dadurch gekennzeichnet,** daß die Gelenkmittel (10) nicht abnehmbar sind.

5. Scheibenwischer nach einem der vorherigen Ansprüche, **dadurch gekennzeichnet,** daß das Scheibenwischerblatt (20) eine Öffnung (6) aufweist und die Verbindungsmittel (8, 9) über Haken (8) verfügen, die elastisch mit den Kanten der genannten Öffnung (6) zusammenwirken.

6. Scheibenwischer nach einem der vorherigen Ansprüche, **dadurch gekennzeichnet,** daß das Scheibenwischerblatt (20) eine Querachse (5) aufweist und die Verbindungsmittel (8, 9) eine Klemme (9) besitzen, die an der genannten Achse (5) einrastet.

7. Scheibenwischer nach einem der vorherigen Ansprüche, **dadurch gekennzeichnet,** daß das Ablenkelement (7) wenigstens eine Führungsfläche (19) besitzt, die mit einer zum Wischblattarm (1) passenden Führungsfläche zusammenwirkt.

8. Scheibenwischer nach einem der vorherigen Ansprüche, **dadurch gekennzeichnet,** daß das Ablenkelement (7) einen Führungsblock (19) enthält, der zwischen den Flügeln des Arms (1) angeordnet ist.

**Claims**

1. A windscreen wiper for a motor vehicle, of the kind comprising an oscillating windscreen wiper arm (1) to which a windscreen wiper blade (10) is articulated by means of a connector means (7) comprising coupling means (8, 9) which are disengageable from the windscreen wiper blade (20), characterised in that the connector means (7) carries firstly the deflecting surface of a deflector (7), and secondly pivot means (10) of the windscreen wiper arm (1) extending transversely of the latter.

2. A windscreen wiper according to Claim 1, characterised in that the free edge of the deflector (7) is provided with a flexible lip (21).

3. A windscreen wiper according to Claim 1 or Claim 2, characterised in that the deflector (7) includes a longitudinal passage (12) adjacent to its free edge, the said passage being supplied with liquid which is sprayed through spray nozzles (13).

4. A windscreen wiper according to one of the preceding Claims, characterised in that the pivot means (10) are not disconnectable.

5. A windscreen wiper according to one of the preceding Claims, characterised in that the windscreen wiper blade (20) has an aperture (6), the coupling means (8, 9) comprising hooks (8) cooperating resiliently with the edges of the said aperture (6).

6. A windscreen wiper according to one of the preceding Claims, characterised in that the blade (20) has a transverse spindle element (5), the coupling means (8, 9) including a gripping element (9) snap-fitting on the said spindle element (5).

7. A windscreen wiper according to one of the preceding Claims, characterised in that the deflector (7) includes at least one guide surface (19) cooperating with a complementary guide surface of the windscreen wiper arm (1).

8. A windscreen wiper according to one of the preceding Claims, characterised in that the deflector (7) includes a guide block (19) located between wing portions of the arm (1).

EP 0 337 042 B1

FIG.1

FIG.2

FIG.3

EP 0 337 042 B1

FIG. 4

FIG.5

FIG.6

FIG.7